# EUROPEAN PATENT APPLICATION

(11) **EP 1 058 433 A2**
(43) Date of publication of application: **06.12.2000**
(21) Application number: 00401501.2
(22) Date of filing: 26.05.2000
(51) Int. Cl.: H04L 25/49

(54) **Conversion between CMI and NRZ**

(30) Priority: 31.05.1999 IT TO990457
(71) Applicant: ALCATEL, 75008 Paris (FR)
(72) Inventor: Panonzini, Massimo, 37122 Verona (IT); Maggio, Santo, 20064 Gorgonzola (Milano) (IT)
(74) Representative: Colombo, Stefano Paolo

(57) **Abstract**

A telecommunications system comprising a physical medium (20) for propagating signals (SI, SU), one or more signal processing stations (19), which are apt to receive and/or transmit said signals (SI, SU), said signals (SI, SU) being propagated on the physical medium (20) according to a first coding method (CMI) to which a first set of signal levels is associated, said signal processing stations (19) being apt to operate on second signals (RXD, RXC; TXD, TXC), which are coded according to a second coding method (NRZ) to which a second set of signal levels is associated. According to the present invention said signal processing stations (19) comprise means for transceiving signals (21, 22, 23, 34), which are apt to operate on second signals (RXD, RXC, TXD, TXC), whose second associated set of signal levels is a 'Low Voltage Differential Signals' type set.

## Description

The present invention relates to a telecommunications system comprising a physical medium for signals propagation, one or more signal processing stations, which are apt to receive and/or transmit said signals, said signals being propagated on the physical medium according to a first coding method to which a first set of signal levels is associated, said signal processing stations being apt to operate on second signals, which are coded according to a second coding method to which a second set of signal levels is associated.

The architecture of digital communications systems comprises a physical medium, i.e. means through which signals are propagated, which may be, for instance, a coaxial cable or optical fiber cable. As it is known, the physical medium, such as a coaxial cable, is used to connect a plurality of signal processing stations, such as transmitters, receivers or transceivers, which receive and transmit the signal again on the physical medium after handling it.

An SDH (Synchronous Digital Hierarchy) digital communications system using a coaxial cable as a physical medium is equipped for instance with a plurality of processing stations, which receive, handle and retransmit SDH frames.

Coaxial cable connection to the SDH station causes some difficulties both in terms of signal reception and transmission, since the signal on the coaxial cable is a coded signal, which needs to be decoded upon its reception.

Moreover, the signal conveyed on the coaxial cable is a high frequency signal, such as 155 MHz. Therefore, all input/output circuits in the signal processing stations, i.e. SDH network nodes have to be very fast ones.

A signal coding method, which is particularly applied with reference to the use of coaxial cables, is known as Coded Mark Inversion (CMI). A CMI signal uses two reference voltages and, additionally, a logic zero always shows a positive transition in the middle of the definition interval, while a logic one always has a constant signal level, either positive or negative, during the whole definition interval; two consecutive logic ones have different voltage levels.

The signal processing station, like most of electronic circuits, uses Non Return to Zero (NRZ) coded signals, which implies an amplitude modulation wherein the signal has two logic values, 1 and 0, identified by two levels. Said NRZ codified signals are usually signals suitable for use with ECL technology voltage levels, that are used for input/output circuits.

One of the arising drawbacks consists in the interferences and disturbances generated by the circuits of the signal processing station in the signal transmitted on the coaxial cable.

Moreover, in the instance of the coaxial cable, the CMI signal has to be converted in an NRZ signal compatible with the electronics of the signal processing station, requiring additional circuits, which are also affected by interferences and often cause a consistent energetic consumption increase.

It is the main object of the present invention to solve the above drawbacks and provide a telecommunications system, having a more efficient and improved performance with respect to the solutions already known.

A further object of the present invention is to provide a telecommunications system which minimizes the interference problem on the signals conveyed on the physical medium and allowing to process high frequency signals at the same time.

A further object of the present invention is to provide a telecommunications system, which reduces energetic consumption caused by the signals processing.

The above and further objects are obtained by a telecommunications system according to claim 1 and a interfacing device according to claim 16. Further advantageous characteristics are set forth in the respective dependent claims. All the claims form an integral part of the description herein.

Further objects, features and advantages of the present invention will become apparent from the following detailed description and annexed drawings, which are supplied by way of non limiting example, wherein:
- Figure 1 shows a block diagram representing the telecommunications system according to the present invention; and
- Figure 2 shows a time diagram of the signals employed by the telecommunications system according to the present invention.

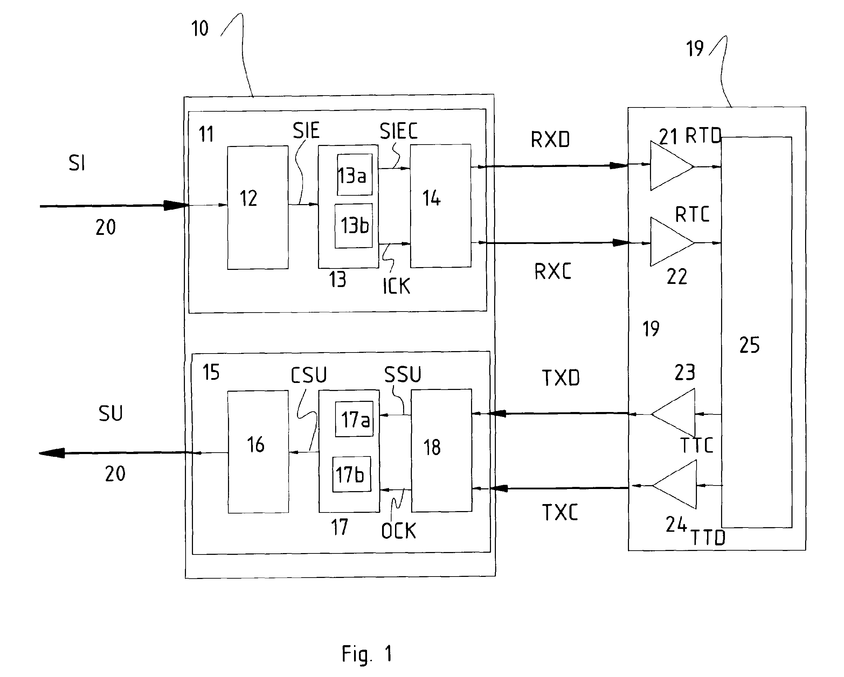

In figure 1 a block diagram shows a telecommunications system according to the present invention.

Figure 1 shows a block diagram of a telecommunications system of the SDH type wherein the signal is transmitted over a coaxial cable 20. An input signal SI containing SDH frames is transmitted over said coaxial cable 20, i.e. a lossy medium and reaches the input of a conversion interface 10 comprising a reception channel 11 and a transmission channel 15. The input signal SI, which is a 155 Mbit/s CMI signal, is received through the reception channel 11, in particular by an equalizer block 12, which is apt to compensate the distortion on the input signal SI induced by the coaxial cable 20. The equalizer block 12 also comprises a signal loss detector, which is apt to detect the lack of transitions of the input signal SI for a certain number of cycles.

Therefore, the equalizer block 12 provides at its output an equalized signal SIE, which is still a CMI signal, but with a compensated distortion adapted to specific requests. Said equalized signal SIE is then sent to a recovery and conversion block 13, which comprises a first clock recovery stage 13b, consisting essentially of a phase locked loop obtained through a DLL (Delay Line Loop) circuit and operating at 155 MHz operational frequency, which will re-clock the data flow contained in the equalized signal SIE.

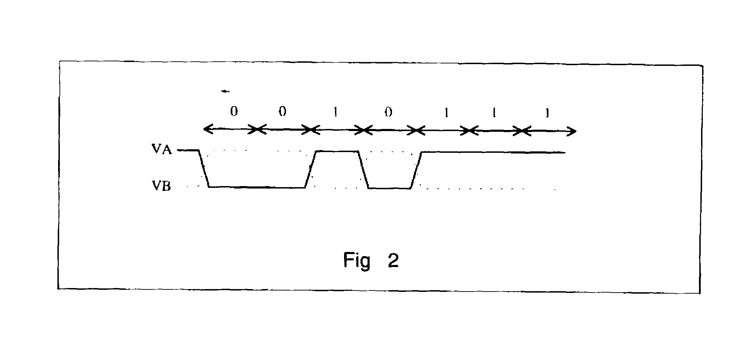

A second conversion stage 13a, consisting of a CMI/NRZ decoder, performs data conversion in a decoded signal SIEC, which is NRZ type. Additionally, an input clock signal ICK, which is the clock signal recovered through the first recovery stage 13b, is supplied at the output of the recovery and conversion block 13. Finally, the reception channel 11 comprises a shift block 14. Said shift block 14 converts both the decoded signal SIEC and the input clock signal ICK in a received data signal RXD and a received clock signal RXC, respectively, which are Low Voltage Differential Signals. Figure 2 represents an example of a received data signal RXD, which is measured between two terminals A and B, not shown in the figures. According to NRZ coding, the logic signal is worth zero when the voltage VA on terminal A is higher than the voltage VB on terminal B, and it takes the value one if the voltage VB on terminal B is higher than the voltage on the terminal A. The maximum high value for voltages VA or VB is for instance 1.475 V, whereas the minimum low voltage is 0.9 V. In other words, the received data signal RXD, as LVDS signal, is a differential signal with 1.2 V offset and 400 mV swing. For further details on LVDS signals reference is made to IEEE Standard 1596.3.

Therefore, the received data signal RXD and received clock signal RXC are the outputs of the conversion interface 10 and are sent to a signal processing station 19, which may typically be, for instance, a switch matrix performing its function of making connections, which re-allocates the position of the Virtual Containers inside SDH frames contained in the input signal SI, and exiting a signal SU containing re-processed SDH frames.

The signal processing station 19 of the telecommunications systems according to the present invention comprises an input buffer 21 for the received data signal RXD, and a clock input buffer 22 for the received clock signal RXC. Said input buffer 21 and clock input buffer 22 are obtained through circuits operating according to LVDS voltage levels and corresponding circuitry technologies, so as to ensure enough speed to operate with 155 MHz signals, though maintaining a low consumption. Said input buffer 21 and clock input buffer 22 will then send received data signals RTD and received clock signals RTC to be handled to a matrix block 25, which is substantially the ASIC circuit according to CMOS technology featuring the switch matrix. Consequently, the received data signals RTD to be handled and received clock signals RTC to be handled will have levels suitable for CMOS technology.

Similarly, at the output of the matrix block 25 a transmitted handled data signal TTD and a transmitted handled clock signal TTC, with CMOS levels associated, which are converted by their respective data output buffer 23 and clock output buffer 24 in LVDS signals, namely, the signal processing station 19 will send to the transmission channel 15 of the conversion interface 10 a transmitted data signal TXD and a transmitted clock signal TXC, which are NRZ signals identified by LVDS logic levels.

Therefore the transmission channel 15 provides a shift block 18 operating conversion of the transmitted data signal TXD in a converted data output signal SSU and conversion of the transmitted clock signal in an output clock signal OCK, which have the logic levels of the signal apt for cable transmission, i.e. between - 0.6 V and 0.6 V. A conversion and synchronization block 17 located downstream comprises a first conversion stage 17a, which performs the coding of the converted data output signal SSU from NRZ signal to a CMI signal type, represented by a coded output signal CSU. A second synchronization stage 17b is obtained through a further circuit DLL and used to correct undesired 'skew' effects contained in the converted data output signal SSU and in the transmitted clock signal in an output clock signal OCK before its coding through the first conversion stage 17a.

Finally, the coded output signal CSU is sent to a masking block 16, which shapes the signal in order to make it compatible with the specifications for transmission on the coaxial cable 20 and adapted for driving at a 75 Q impedance of the coaxial cables.

Then, the output signal SU containing re-processed SDH frames and sent on the coaxial cable 20 from the conversion interface 10 is a CMI signal again at 155 MHz frequency with 1.2 V amplitude.

From the above description the features of the present invention and also its advantages are clear. The telecommunications system according to the present invention allows advantageously to minimize interferences by adopting an input/output circuit based on LVDS technology identified by differential signals, which provide a high common mode rejection and at a low voltage. Moreover, LVDS signals have the required switching speed to transceive high frequency flows, such as 155 Mbit/s flows, implying decidedly lower consumption, for example when compared to ECL differential technologies.

Therefore, the use of nodes with input/output circuits based on LVDS technology also will advantageously lead to a lower node consumption.

Moreover, the telecommunications system according to the present invention uses an interface converting the signal in LVDS signal, that show particularly low consumption compared with the transceivers usually employed, since DLL circuits are used instead of analog PLL circuits to perform data resynchronization.

Moreover, the interface has advantageously an equalizer circuit compensating the distortions induced by the physical medium and in particular by the coaxial cable.

There has thus been shown and described a novel telecommunications system and a novel interfacing device which fulfills all the objects and advantages sought therefor. Many changes, modifications, variations and other uses and applications of the subject invention will, however, become apparent to those skilled in the art after considering the specification and the accompanying drawings which disclose preferred embodiments thereof. All such changes, modifications, variations and other uses and applications which do not depart from the spirit and scope of the invention are deemed to be covered by the invention which is limited only by the claims which follow.

For instance, the telecommunications system according to the present invention may also be easily extended to PDH plesiochronous networks without departing from the inventive spirit characterizing it.

Similarly, the telecommunications system according to the present invention may be extended to networks using optical fiber layers (SONET networks) operating their optoelectric conversion through an interface circuit that provides a conversion device such as a photodiode, and conditioning directly the electrical signal obtained according to LVDS levels to send it directly to the input/output buffers.

## Claims

1. Telecommunications system comprising a physical medium (20) for propagating signals (SI, SU), one or more signal processing stations (19), which are suitable to receive and/or transmit said signals (SI, SU), said signals (SI, SU) being propagated over the physical medium (20) according to a first coding method (CMI) to which a first set of signal levels is associated, said signal processing stations (19) being apt to operate on second signals (RXD, RXC; TXD, TXC), which are coded according to a second coding method (NRZ) to which a second set of signal levels is associated, characterized in that said signal processing stations (19) comprise means for transceiving signals (21, 22, 23, 34), which are apt to operate on second signals (RXD, RXC, TXD, TXC), whose second associated set of signal levels is a "Low Voltage Differential Signals"-type set.

2. System according to claim 1, characterized in that said means for transceiving signals (21, 22, 23, 24) comprise input buffers (21, 22) and output buffers (23, 24), which are apt to receive and transmit said second signals (RXD, RXC, TXD, TXC), respectively.

3. System according to claim 1, characterized in that said input buffers (21, 22) and said output buffers (23, 24) are apt to exchange third signals (RTD, RTC, TTD, TTC) having a third set of signal levels (cMOS) with signal processing circuits (25) contained in said signal processing station (19).

4. System according to claim 3, characterized in that interfacing means (10) are provided between the physical medium (20) and the signal processing stations (19).

5. System according to claim 4, characterized in that said interfacing means (10) comprise a transmission channel (15) and a reception channel (11).

6. System according to claim 5, characterized in that the transmission channel (15) and the reception channel (11) comprise phase locked synchronization means (13b, 17b).

7. System according to claim 6, characterized in that said phase locked synchronization means (13b, 17b) are digital, in particular Delay Line Loops.

8. System according to claim 7, characterized in that the reception channel (11) comprises means converting the signal to LVDS levels (14).

9. System according to claim 7, characterized in that the transmission channel (15) comprises means converting the signal from LVDS levels (18).

10. System according to claim 7, characterized in that the reception channel (11) comprises decoding means (13a) from the first coding method to the second coding method and the transmission channel (15) comprises coding means (17a) from the second coding method to the first coding method.

11. System according to at least one of the previous claims, characterized in that the first coding method is a Coded Mark Inversion method and the second coding method is a Non Return to Zero method.

12. System according to at least one of the previous claims, characterized in that the physical medium (20) is a coaxial cable.

13. System according to at least one of the previous claims, characterized in that the physical medium (20) is an optical fiber.

14. System according to at least one of the previous claims, characterized in that the signals (SI, SU) propagated on the physical medium (20) and the signals (RXD, TXD) processed by the signal processing stations (19) are SDH signals.

15. System according to at least one of the previous claims, characterized in that the signals (SI, SU) propagated on the physical medium (20) and the signals (RXD, TXD) processed by the signal processing stations (19) are PDH signals.

16. Interfacing device between a physical medium (20) and signal processing stations, the signals (SI, SU) being propagated on the physical medium (20) according to a first coding method (CMI) with associated a first set of signal levels, said signal processing stations (19) being apt to operate on second signals (RXD, RXC; TXD, TXC), which are coded according to a second coding method (NRZ) with associated a second set of signal levels, characterized in that said interfacing device (10) comprises a transmission channel (15) and/or a reception channel (11), which in turn comprise digital phase locked synchronization means (13b, 17b), in particular Delay Line Loops.

17. Device according to claim 16, characterized in that the reception channel (11) comprises means converting the signal to LVDS levels (14).

18. Device according to claim 16, characterized in that the transmission channel (15) comprises means converting the signal from LVDS levels (18).

19. Device according to claim 16, characterized in that the reception channel (11) comprises decoding means (13a) from the first coding method to the second coding method and the transmission channel comprises coding means (17a) from the second coding method to the first coding method.

20. Device according to at least one of claims 16-19, characterized in that the first coding method is a Coded Mark Inversion method and the second coding method is a Non Return to Zero method.

21. Device according to at least one of the previous claims, characterized in that the physical medium (20) is a coaxial cable.
